# EUROPEAN PATENT APPLICATION

(11) **EP 2 597 342 A1**
(43) Date of publication of application: **29.05.2013**
(21) Application number: 11191030.3
(22) Date of filing: 28.11.2011
(51) Int. Cl.: F16K 1/00, F16K 1/44, F16K 25/00, F16K 27/02, F28F 19/02

(54) **Seat valve with anti-fouling properties**

(71) Applicant: Alfa Laval Corporate AB, 221 00 Lund (SE)
(72) Inventor: Anehamre, Jonas, SE-226 47 LUND (SE); Nilsson, Mats, SE-226 47 LUND (SE); Rehhoff, Kenneth, DK-5000 ODENSE (DK)
(74) Representative: Öberg, Markus Olof

(57) **Abstract**

A seat valve comprising a valve housing that has an inlet opening (3), an outlet opening (4) and a valve seat (11), the valve seat (11) being arranged such that a liquid may flow from the inlet opening (3), past the valve seat (11) and to the outlet opening (4). An interior surface (16) of the valve housing (2) comprises a coating (701) that i) has a layer thickness of 1-30 µm, ii) comprises silicon oxide (SiOx) having an atomic ratio of O/Si > 1, and iii) comprises ≥ 5 atomic percent carbon (C).

## Description

### Technical Field

The invention relates to a seat valve that has properties for reducing fouling and for facilitate cleaning the valve.

### Background Art

Today several different types of valves exist and are employed in various applications depending on their type. One certain type of valve is the seat valve, which includes e.g. both single seat valves and double seat valves. The seat valve is commonly used in the food and beverage industry and has been described in a number of patent documents, such as in US6014983 and WO2009071217.

The seat valve has at least one housing in which a valve stem moves for closing respectively opening the valve. During operation of the valve fluid is present in the housing and around the valve stem and around a valve disc. The valve must in most applications be regularly cleaned, typically by flushing a cleaning liquid through the housing or, if needed, by disconnecting the valve and cleaning it manually or in another suitable way. During the cleaning it is important that fouling in from of deposits, microbial growth, dirt etc. that arise from fluid that passes the valve is properly removed. This is important not only from a hygienic perspective but also from an efficiency perspective since pressure drops over the valve must be avoided. The latter case is typically of more concern in chemical applications where hygiene problem usually do not arise.

A number of solutions exist for improving cleaning and/or for reducing fouling of a seat valve. However, it appears that improvements are still required if use of cleaning liquids shall be minimized and/or if a seat valve shall be able to operate for a long period of time before cleaning is required.

### Summary

It is an object of the invention to find a seat valve with properties that reduces fouling and/or facilitates efficient cleaning.

To fulfill this objects a seat valve is provided. The seat valve comprises a valve housing that has an inlet opening, an outlet opening and a valve seat. The valve seat is arranged such that a liquid may flow from the inlet opening, past the valve seat and to the outlet opening. The seat valve comprises a valve bonnet that has a passage for a valve stem that extends into the valve housing, the valve stem being movable in a direction towards the valve seat and having a valve disk for closing the valve by bringing the valve disk in contact with the valve seat. An interior surface of the valve housing comprises a coating that i) has a layer thickness of 1-30 µm, ii) comprises silicon oxide (SiOx) having an atomic ratio of O/Si > 1, and iii) comprises ≥ 5 atomic percent carbon (C). The coating may be prepared by sol-gel processing.

The seat valve is advantageous in that fouling of the seat valve is significantly reduced. As a consequence no or less cleaning is required. This reduces use of strong detergents and/or potentially abrasive, mechanical cleaning as well as reduces an operational downtime of the seat valve. Moreover, the coating is quite wear resistant and has a relatively good resistance against formation of cracks in the coating which otherwise might be caused by vibrations and other forces that act on the seat valve.

Generally, every surface of the seat valve that is in contact with a fouling fluid may comprise the coating. In detail, the seat valve may comprise a seal that is arranged between the valve bonnet and the valve stem, wherein the seal is at least partly coated with the coating. In one embodiment, the bonnet is at least partly coated with the coating. In one embodiment each of the valve stem and the valve disc may be at least partly coated with the coating.

The seat valve may have predetermined measurements for a number of the sections and components it comprises. For example, the inlet opening and the outlet opening may comprise a respective conduit section that comprises a thickness of 1,4-1,8 mm or 1,6-2 mm. The valve stem may comprise a thickness of 15-20 mm or 20-35 mm. The valve bonnet may comprise a thickness of 10-25 mm or 22-28 mm. Finally, the valve housing may comprise a thickness of 4-6 mm or 3-5 mm. These measurements are particularly relevant when the valve housing is made of stainless steel, but also when it is made of titanium.

Empirical tests as well as finite element-based analysis have shown that each of these measurements, either alone or one or more in combination, provides a structure of the seat valve that is particularly suitable for the coating. The underlying reason for this is that the measurements provide a seat valve structure that prevents extensive vibration of the valve and flexing of its components when the valve is operated. This is of great advantage since the coating then remains on valve for a long period of time (vibration and in particular flexing cause the coating to fall off or wear out faster). Thus, the coating together with one or more of the predetermined measurements provide a seat valve that has been optimized in respect of resisting fouling for a longer period of time.

The seat valve may comprise a further valve stem that extends though a hollow centre the valve stem and is movable in the direction towards the valve seat for bringing a valve disc of the further valve stem into contact with the valve seat, wherein the valve seat has a thickness of 20-30 mm. This thickness provides the same advantage as the measurements above, but for a double seat valve.

The layer thickness of the coating may be 2-30 µm, or 2-20 µm, or 5-30 µm, or 5-15 µm. The silicon oxide, SiOx, may have an atomic ratio of O/Si = 1.5-3, or has an atomic ratio of O/Si = 2-2.5. The coating may have a content of carbon of 20-60 atomic%, or 30-40 atomic% or 5-20 atomic%.

Further features, objectives, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a cross-sectional view of a seat valve,
Fig. 2 is a schematic, cross-sectional view of a coated section of the seat valve of Fig. 1, and
Fig. 3 is another embodiment of a seat valve in form of a double seat valve that is coated with a coating similar to that of Fig. 2.

### Detailed description

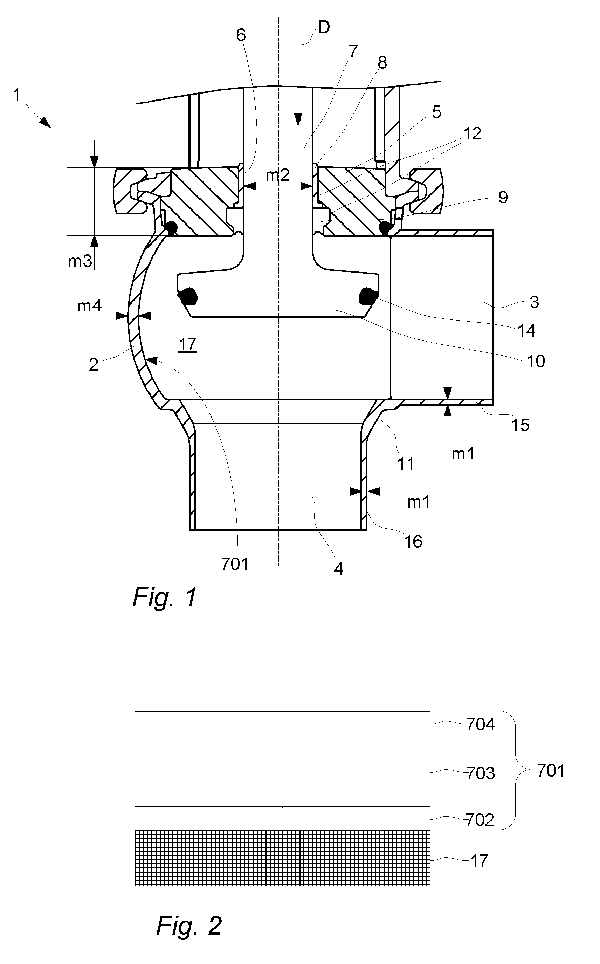

With reference to Fig. 1 a seat valve 1 is illustrated. The seat valve 1 comprises a valve housing 2 that has an inlet opening 3 and an outlet opening 4. The valve housing 2 has a valve bonnet 5 with a passage 6 for a valve stem 7 that extends into the valve housing 2. A bushing 8 for the valve stem 7 is arranged in the passage 6 for supporting the valve stem 7. A seal in form of a lip seal 9 is also arranged in the passage 6, such that a sealing between the valve stem 7 and the valve bonnet 5 is accomplished. The bushing 8 and the lip seal 9 are fixed to the valve bonnet 5 in a cut-out 12 that forms the passage 6 for the valve stem 7. The inlet opening 3 may comprise a conduit section 15 and the outlet opening 4 may comprise another conduit section 16. The conduit sections 15, 16 have the form of pipes that extend from the valve housing 2 and are typical integral with the valve housing 2.

The valve stem 7 has a valve disc 10 and is movable in a direction D towards a valve seat 11 that is located at the outlet opening 4. When the valve disc 10 abuts the valve seat 11, i.e. when the valve disc 10 is brought into contact with the valve seat 11, then the seat valve 1 is closed. The valve stem 7 may move in the opposite direction, from the valve seat 11, which thereby opens the valve such that a liquid may flow from the inlet opening 3 to the outlet opening 4. Thus, the valve seat 11 is arranged such that a liquid may flow from the inlet opening 3, past the valve seat 11 and to the outlet opening 4, which is a common arrangement for seat valves. A gasket 14 is arranged at a periphery of the valve disc 10, at a section of the valve disc 10 that is in contact with the valve seat 11 when the valve stem 7 is in a position closest to the valve seat 11 (i.e. when the valve housing 2 is closed).

The seat valve 1 comprise a conventional actuator (not shown) for moving the valve stem 7 in directions towards and from the valve seat 11. Any suitable actuator may be used for this purpose, such as e.g. pressure activated actuators.

The seat valve 1 comprises a coating 701. The coating may be referred to as a non-stick coating and makes it easy to clean the valve. The coated seat valve 1 provides improved cleaning properties and in some applications an improved flow of liquid over time compared to conventional seat valves since the latter gets fouled much quicker. The coating also results in a much more even valve surfaces, which gives better flow characteristics. Also, a pressure drop over valve is reduced in comparison with conventional seat valves, since any buildup of impurities, microorganisms and other substances is reduced.

The coating is typically applied on one or more of an interior surface 17 of the valve housing 2, on the inside of the conduit section 15, on the inside of the conduit section 16, on the valve stem 7, on the valve disc 10, on a side of the lip seal 9 that faces the interior of the valve housing 2, and on side of the gasket that 14 faces outward from the valve disc 10. The full valve stem 7 may be coated, however, it is sufficient that only the parts of the valve stem 7 are coated, such as the parts that are in contact with liquid when the valve stem 7 is in its upmost position (i.e. when the seat valve 1 is fully open). The bonnet 5 is also coated, typically on the surface that faces the interior of the valve housing 2. Generally, every surface of the seat valve 1 that is in contact with a fouling fluid may comprise the coating.

The coated seat valve 1 may easily be cleaned by letting a cleaning liquid such as e.g. water flow through the seat valve 1. Moreover, there is no need for extensive, time consuming mechanical cleaning or cleaning using strong acids, bases or detergents, such as e.g. NaOH and HNO₃.

The valve may in a sol-gel process be coated with the coating, which comprises organosilicon compounds. The organosilicon compounds are starting materials that are used in the sol-gel process and are preferably silicon alkoxy compounds. In the sol-gel process a sol is converted into a gel to produce nano-materials. Through hydrolysis and condensation reactions a three-dimensional network of interlayered molecules is produced in a liquid. Thermal processing stages are then used to process the gel further into nano-materials or nanostructures, which results in a final coating. The coating comprising said nano-materials or nanostructures mainly comprise silicon oxide, SiOₓ, having an atomic ratio of O/Si > 1, alternatively an atomic ratio within the range of O/Si = 1.5-3, or alternatively within the range of O/Si = 2-2.5. By an "atomic ratio of O/Si > 1" is meant that the number of Oxygen atoms (O) of the silicon oxide (SiOₓ) divided by the number of Silicon atoms (Si) of the silicon oxide (SiOₓ) is larger than one. Correspondingly, for the alternatives the number of Oxygen atoms (O) divided by the number of Silicon atoms is within the range of 1.5-3, or within the range of 2-2.5.

A preferred silicon oxide is silica, SiO₂. The siliconoxide forms a three dimensional network having excellent adhesion to the valve. The coating has carbon content that originates from hydrocarbon chains. The hydrocarbons chains may have functional groups such as those found in hydrocarbon chains or aromatic groups, e g C=O, C-O, C-O-C, C-N, N-C-O, N-C=O, etc. Preferably the content of the carbon is ≥ 5 or 10 atomic%, or in the range of 20-60 atomic%, or in the range of 30-40 atomic%. The carbon impart flexibility and resilience to the coating which is important if seat valve 1 during operation flex or vibrate due to e.g. high pressures changes or due to movement of the valve stem 7. The hydrocarbon chains are hydrophobic and oleophobic, which results in the non-stick properties of the coating.

With reference to Fig. 2 a schematic view is shown where the interior surface 17 of the valve housing 2 is provided with a siliconoxide sol gel coating 701 as described above. The coating is also referred to as siliconoxide layer 701. Closest to the interior surface 17 the siliconoxide layer 701 forms an interface 702 between the coating siloxane and a metal oxide film of the interior surface 17. A bulk of the coating 701 is the siloxane network 703 that has organic linker chains and voids that impart flexibility to the coating 701. The siloxane network 703 is "on top" of the interface 702. The siliconoxide layer 701 forms an outermost layer in from of a functional surface 704 that has hydrophobic and oleophobic properties that reduce fouling. There are no sharp boundaries between the interface 702 and the siloxane network 703 respectively the siloxane network 703 and the functional surface 704, but rather gradual transitions

All components of the seat valve 1 that may be coated may have the coating described in connection with Fig. 2. The coating is both durable and flexible and provides a seat valve 1 that has excellent non-stick properties.

In one embodiment at least one sol comprising organosilicon compounds is applied to the interior surface 17. The interior surface 17 may be wetted/coated with the sol in any suitable way. The surface coating may e.g. be applied by spraying, dipping or flooding. Typically, all surfaces seat valve 1 that will be in contact with a fluid that may cause fouling are coated. Also, the lip seal 9 and the gasket 14 may be coated typically with the same type of coating that is used for the interior surface 17 of the valve housing 2, even though e.g. both the lip seal 9 and the gasket 14 are made of a plastic material.

A method of coating seat valve 1 comprises pretreatment of at least the surfaces to be coated. This pretreatment may be carried out by means of dipping, flooding or spraying. The pretreatment is used to clean the surfaces to be coated in order to obtain increased adhesion of the coating. Examples of pretreatments are washing with acetone and/or alkaline solutions, e.g. caustic solution.

The method of coating the seat valve 1 may comprise thermal processing stages, e.g. a drying operation may be carried out after a pretreatment and a drying and/or curing operation may be used after the coating of the seat valve 1 has taken place. The coating may be subjected to heat by using conventional heating apparatuses, such as ovens.

The coating, which as indicated comprises SiOx, is applied to seat valve 1. The application of the coating is done by means of sol-gel processing. The coating is preferably between 1 and 30 µm thick. A coating thickness below 1 µm is considered being not enough wear resistant since seat valve 1 able to "flex" slightly during operation. Flexing of the seat valve 1 causes wear on the coating and with time the coating wear down. Still, the thickness of the coating has an upper limit since the application of substances in the seat valve 1 influences the flow characteristics of the valve. The upper limit for the thickness of the coating may be 50 µm. In detail, the coating thickness of the silicon oxide sol containing coating may be 1-30 µm, and in alternatives it may be 1.5-25 µm, 2-20 µm, 2-15 µm, 2-10 µm or 3-10 µm.

The material of which the valve housing 2, the valve bonnet 5 and the valve stem 7 are made of may be chosen from several metals and metal alloys. Preferably, the material is stainless steel or titanium. The material may also be chosen from nickel, copper, any alloys of the mentioned metals and/or carbon steel. The valve stem 7 and the valve disc 10 may be made of plastics.

In an attempt to find more a foul resistant seat valve, tests were conducted on two low surface energy glass ceramic coatings of which both are of the type of coating described above. The tested coatings are referred to as Coat 1 and Coat 2. The tests, the analysis and the results are presented below. Coat 1 is a silan terminated polymer in butyl acetate and Coat 2 is a polysiloxan-urethan resin in solvent naphtha/butylacetate. The test were performed coated seat valves like the seat valve 1. In the following a seat valve for which tests is performed is also referred to as "substrate".

The tests shows properties of the coatings in respect of substrate wetting, substrate adhesion, contact angle, coating thickness and stability against 1.2 % HNO₃ in H₂O, 1 % NaOH in H₂O and crude oil. The results are summarized below in Table 1.

**Table 1**

| | **Coat 1** | **Coat 2** |
|---|---|---|
| **Substrate wetting** | Excellent | Excellent |
| **Substrate adhesion** | Al: 0/0 | Al: 0/0 |
| | Stainless steel: 0/0 | Stainless steel: 0/0 |
| | Ti: 0/0 (see below) | Ti: 0/0 (see below) |
| **Contact angle measurements** | H₂O: 102-103° | H₂O: 102-103 ° |
| **Coating thickness** | 4-10 µm | 2-4 µm |
| **Stability** | 1.2 % HNO₃ in H₂O: 1½ h at 75 °C | 1.2 % HNO₃ in H₂O: 1½ h at 75 °C |
| | 1% NaOH in H₂O: 3 h at 85 °C | 1 % NaOH in H₂O: 2 h at 85 °C |
| | Crude oil: 6 months at 20 °C | Crude oil: 6 months at 20 °C |

Both coatings showed excellent wetting when spray coated onto either stainless steel or titanium substrates.

Adhesion was determined by cross-cut/tape test according to the standard DIN EN ISO 2409. Rating is from 0 (excellent) to 5 (terrible). 0 or 1 is acceptable while 2 to 5 is not. First digit indicates rating after cross cut (1 mm grid) and the second digit gives rating after tape has been applied and taken off again.

To obtain proper adhesion for Coat 1 and Coat 2 the substrates were subjected to pre-treatment. To obtain a proper adhesion of Coat 1 on stainless steel the substrate was pre-treated by submerging it in an alkaline cleaning detergent for 30 minutes. Next the substrate was washed with water and demineralized water and dried before Coat 1 was applied (applied within half an hour to achieve optimal adhesion). Tests have shown that the adhesion is reduced if cleaning of the substrate is only carried out with acetone. Pre-treatment was also used for stainless steel substrates that are coated with Coat 2. This coating displayed unaffected adhesion whether an alkaline detergent or acetone was used as pre-treatment or not. If the pre-treatment step is neglected or not properly made the coating adhesion will be effected.

Both coatings showed good stability under acidic condition. The coatings were stable for 1½ hours at 75 °C and more than 24 hours at room temperature.

Under alkaline conditions Coat 1 showed a better result than Coat 2. Coat 1 could withstand the alkaline conditions for 3 hours at 85 °C and Coat 2 for 2 hours at 85 °C. Both coatings showed no decomposition or reduction in oleophobic properties after being subjected to crude oil for 6 months at a temperature of 20 °C.

One seat valve 1 was then coated with Coat 1 and another, similar one with Coat 2. The seat valves were in this test made of titanium and were tighter with an uncoated valve used in a crude oil application. All coated surfaces underwent pre-treatment, which comprised treatment with acidic and alkaline solutions to remove fouling and high pressure washing valve with water. The valves were left to dry before application of coating.

The pre-treatment was completed a day before Coat 1 and Coat 2 were applied to the respective valve. As the valves had been left to dry at ambient temperature (approximately cover 20 °C), pars of them were still wet. The coating was accomplished by spraying the respective coat into housings, on the bonnets and on the valve stems with the discs. The thickness of the coating was measured to be 2-4 µm. Curing/drying for the two coatings was performed for 1½ hours in an oven at elevated temperatures of 200 °C respectively 160 °C. An evaluation of the valves was performed after about seven months of operation.

The valves were analyzed after the seven months. In detail, three valves were analyzed by means of XPS (X-ray Photoelectron Spectroscopy), also known as ESCA (Electron Spectroscopy for Chemical Analysis). The XPS method provides quantitative chemical information, including a chemical composition expressed in atomic% for the outermost 2-10 nm of a surface.

A measuring principle of the XPS method comprises that a sample (i.e. a valve coated with Coat 1, a valve coated with Coat 2 and an uncoated valve) is placed in high vacuum and is irradiated with well defined x-ray energy, which results in an emission of photoelectrons from the sample. Only photoelectrons from the outermost surface of the sample reach the detector. By analyzing the kinetic energy of the photoelectrons, their binding energy can be calculated, thus giving their origin in relation to a chemical element (including the electron shell) of the sample.

XPS provided quantitative data on both the elemental composition and different chemical states of a chemical element of the sample (such as different functional groups, chemical bonding, oxidation state, etc). All chemical elements except hydrogen and helium are detected and the obtained chemical composition of the sample is expressed in atomic%.

XPS spectra were recorded using a Kratos AXIS Ultra ^{DLD} x-ray photoelectron spectrometer. The samples were analyzed using a monochromatic Al x-ray source. The analysis area was below 1mm². In the analysis so a called wide spectra run was performed to detect chemical elements present in the surface of the sample. The relative surface compositions were obtained from quantification of each chemical element.

When valves with different types (in respect of a content of C, O and Si) of the silicon oxide coating described herein are analyzed, or more precisely when the chemical elements of the coating is analyzed, a relative surface composition in atomic% and an atomic ratio O/Si may be found. It has then been observed that mainly C, O and Si may be detected on the outermost surfaces of the coating. A content of C is typically 41.9-68.0 atomic%, a content of O is 19.5-34.3 atomic% while a content of Si is 8.6-23.4 atomic%. The atomic ratio O/Si is 1.46-2.30. Note that for the atomic ratio O/Si, the total amount of oxygen is used. This means that also oxygen in functional groups with carbon is included. Otherwise, for silica a theoretical ratio O/Si of 2.0 is expected (i.e. SiOx in form of SiO₂).

A visual inspection revealed that the valve with the coating designated Coat 1 was covered with the least amount of fouling. Also, Coat 2 had a reduced amount of fouling compared to the bare titanium valve, but to a lesser extent then Coat 1. The bare titanium valve was on the inside covered in a thick layer of fouling crude oil. The term "fouling" is here used to describe deposits formed in valve during operation. The fouling is residues and deposits formed by the crude oil and consists of a waxy, organic part and a mineral/inorganic part.

By subtracting the average weight of a clean valve from the weight recorded for the individual fouled valves the average amount of fouling per valve was calculated (table 2). The weight of the coating was not compensated for and so the real fouling reduction is slightly higher.

**Table 2**

| **Surface** | **Average fouling (g)** | **Fouling reduction (%)** |
|---|---|---|
| Titanium | 52 | - |
| Coat 1 | 19 | 63 |
| Coat 2 | 36 | 31 |

For both Coat 1 and Coat 2 the fouling of the valves was more easily removed compared to the fouling in a bare titanium valve, see Table 3. The difference in cleaning requirements was tested by manually wiping of the valves with a tissue and by high pressure water cleaning. Just wiping the valve surfaces with a tissue showed that the fouling was very easily removed from the valve, contrary to the uncoated valve.

**Table 3**

| | **Coat 1** | **Coat 2** | **Uncoated** |
|---|---|---|---|
| **View** | very little fouling | reduced fouling | fouling significant and widespread |
| **Wipe with tissue** | very easy to remove fouling | very easy to remove fouling | fouling was not removed |
| **High pressure water washing** | the valve appeared as new | most of the fouling was removed | even after attempts of manual removal of fouling, still some remains |

The coatings resistance to cold conditions was tested submerging the valves in liquid nitrogen having a temperature of -196 °C. Next the valves were washed by high pressure water, which removed almost all fouling. No coating failure was observed for either Coat 1 or Coat 2.

Turning back to Fig. 1 seat valve 1 has predetermined measurements for a number of the components it comprises. For example, each conduit section 15, 16 may have a thickness m1 of 1,4-1,8 mm. The valve stem 7 may have a thickness m2 of 15-20 mm. The valve bonnet 5 may have a thickness m3 of 10-25 mm. The valve housing 2 may have a thickness m4 of 4-6 mm. The thickness m4 is typically a wall thickness of the valve housing 2. The thickness m2 of the valve stem 7 corresponds to a diameter of the valve stem 7. The thickness m3 of the valve bonnet 5 is a thickness in the direction D along which the valve stem 7 is movable.

As explained, these measurements provide, each alone or in combination, conditions where the seat valve 1 flex less which allows the coating to remain on the seat valve 1 and its components for a longer period of time. Still, the components are not unnecessarily over-dimensioned but the measurements has been optimized in respect of allowing the coating to remain for a longer period of time while still assuring that reasonable amounts of materials are used for the seat valve 1.

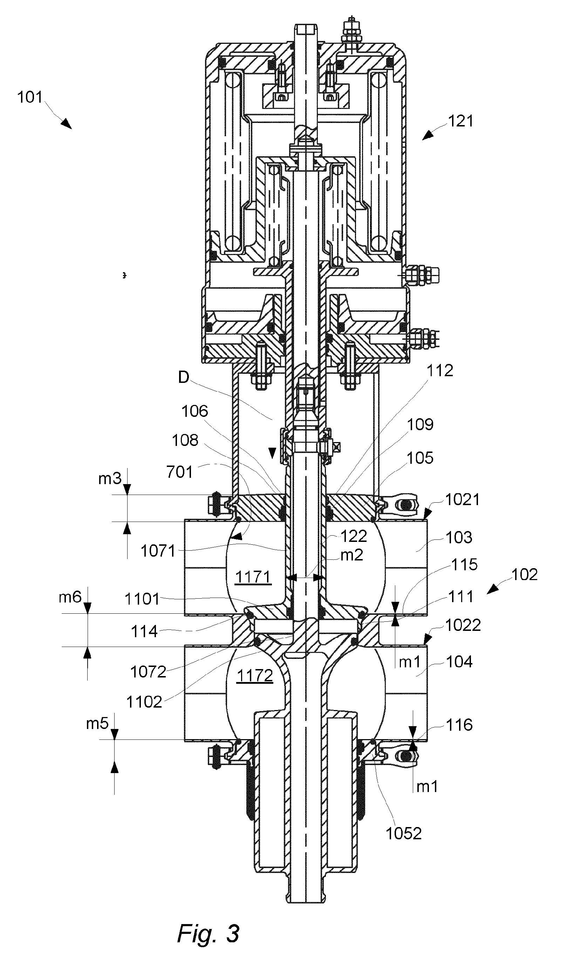

With reference to Fig. 3 another embodiment of a seat valve 101 in form of a double seat valve is shown. The double seat valve 101 comprises a valve housing 102 that has a first housing part 1021 that is joined with a second housing part 1022. The valve housing 102 has an inlet opening 103 and an outlet opening 104. As may be seen, the valve 101 has two additional openings. The valve housing 102 has a valve bonnet 105 with a passage 106 for a valve stem 1071 that extends into the valve housing 102. A bushing 108 for the valve stem 1071 is arranged in the passage 106 for supporting the valve stem 1071. A seal in form of a lip seal 109 is also arranged in the passage 106, such that a sealing between the valve stem 1071 and the valve bonnet 105 is accomplished. The bushing 108 and the lip seal 109 are fixed to the valve bonnet 105 in a cut-out 112 that forms the passage 106 for the valve stem 1071. The inlet opening 103 may comprise an conduit section 115 and the outlet opening 104 may comprise another conduit section 116. The conduit sections 115, 116 have the form of pipes that extend from the valve housing 102 and are typical integral with a respective housing part 1021, 1022.

The valve stem 1071 has a valve disc 1101 and is movable in a direction D towards a double valve seat 111 that is located between the inlet opening 103 and the outlet opening 104. When the valve disc 1101 abuts the valve seat 111 then the seat valve 101 is closed. The seat valve 101 has a further valve stem 1072 that extends though a hollow centre 122 of the valve stem 1071 and is movable in the direction D towards the double valve seat 111 for bringing a valve disc 1102 of the further valve stem 1072 into contact with the double valve seat 111. For fully opening the valve 101 the valve stems 1071, 1072 are moved in a direction from the double valve seat 111. For closing the valve 101 the valve stems 1071, 1072 are moved in a direction towards the double valve seat 111, until the valve discs 1101, 1102 abuts the double valve seat 111. A gasket 114 is arranged at a periphery of the valve disc 1101, at a section of the valve disc 1101 that is in contact with the double valve seat 111 when the valve stem 1071 is in a position closest to the double valve seat 111.

The valve housing 102 has a further valve bonnet 1052 that is opposite the valve bonnet 105. The seat valve 101 comprise a conventional actuator 121 for moving the valve stems 1071, 1072 in directions towards and from the double valve seat 111. Further details and additional features of the seat valve 101 are found in patent document US6014983, which is incorporated herein by reference.

A coating 701 is arranged on interior surfaces 1171, 1172 of the valve housing 102, on the inside of the conduit section 115, on the inside of the conduit section 116, on the valve stems 1071, 1072, on the valve discs 1101, 1102, on a side of the lip seal 109 that faces the interior of the valve housing 102, and on side of the gasket that 114 faces outward from the valve disc 1101. Additional gaskets and seal of the seat valve seat valve 101 may be coated as well. The bonnet 105, the further bonnet 105 and the double valve seat 111 are typically also coated. Generally, every surface of the seat valve 101 that is in contact with a fouling fluid may comprise the coating. The coating is of the type described in connection with Figs 1 and 2.

The seat valve 101 has predetermined measurements for a number of the components it comprises. For example, each conduit section 115, 116 may have a thickness m1 of 1,6-valve housing 2,0 mm. The valve stem 1071 may have a thickness m2 of 20-35 mm. The valve bonnet 105 may have a thickness m3 of 22-28 mm. The valve housing 102 may have a thickness (wall thickness) of 3-5 mm, typically at the interior surfaces 1171, 1172. The further bonnet 105 may have a thickness m5 of 22-28 mm and the double valve seat 111 may have thickness m6 of 22-28 mm or even 20-30mm. The thickness m2 of the valve stem 1071 corresponds to a diameter of the valve stem 1071. The thicknesses m3, m5 and m6 are thicknesses in the direction D along which the valve stems 1071, 1072 are movable.

These measurements provide, each alone or in combination, conditions where the double seat valve 101 flexes less which allows the coating to remain on the double seat valve 101 and its components for a longer period of time. Still, the components are not unnecessarily over-dimensioned but the measurements has been optimized in respect of allowing the coating to remain for a longer period of time while still assuring that reasonable amounts of materials are used for the double seat valve 101.

From the description above follows that, although various embodiments of the invention have been described and shown, the invention is not restricted thereto, but may also be embodied in other ways within the scope of the subject-matter defined in the following claims. For example, optimization calculations may show that other measurements for components of the seat valves 1, 101 may provide a structure that allows the coating to remain on the coated surfaces for long period of time.

## Claims

1. A seat valve comprising a valve housing (2, 102) that has an inlet opening (3), an outlet opening (4) and a valve seat (11, 111), the valve seat (11) being arranged such that a liquid may flow from the inlet opening (3), past the valve seat (11) and to the outlet opening (4), and a valve bonnet (5) that has a passage (6) for a valve stem (7, 1071) that extends into the valve housing (2), the valve stem (7) being movable in a direction (D) towards the valve seat (11) and having a valve disk (10) for closing the valve by bringing the valve disk (10) in contact with the valve seat (11), **characterized in that**
an interior surface (17) of the valve housing (2) comprises a coating (701) that
i) has a layer thickness of 1-30 µm,
ii) comprises silicon oxide (SiOx) having an atomic ratio of O/Si > 1, and
iii) comprises ≥ 5 atomic percent carbon (C).

2. A seat valve according to claim 1, comprising a seal (9) that is arranged between the valve bonnet (5) and the valve stem (7), wherein the seal (9) is at least partly coated with the coating (701).

3. A seat valve according to claim 1 or 2, wherein the bonnet (5) is at least partly coated with the coating (701).

4. A seat valve according to any one of claims 1 - 3, wherein each of the valve stem (7) and the valve disc (10) is at least partly coated with the coating (701).

5. A seat valve according to any one of claims 1 - 4, wherein the inlet opening (3) and the outlet opening (4) comprises a respective conduit section (15, 16) that has a thickness (m1) of 1,4-1,8 mm or 1,6-2 mm.

6. A seat valve according to any one of claims 1 - 5, wherein the valve stem (7) has a thickness (m2) of 15-20 mm or 20-35 mm.

7. A seat valve according to any one of claims 1 - 6, wherein the valve bonnet (5) has a thickness (m3) of 10-25 mm or 22-28 mm.

8. A seat valve according to any one of claims 1 - 7, wherein the valve housing (2) has a thickness (m4) of 4-6 mm or 3-5 mm.

9. A seat valve according to any one of claims 1 - 8, comprising a further valve stem (1072) that extends though a hollow centre (122) of the valve stem (1071) and is movable in the direction (D) towards the valve seat (111) for bringing a valve disc (1102) of the further valve stem (1072) into contact with the valve seat (111), wherein the valve seat (111) has a thickness of 20-30 mm.

10. A seat valve according to any one of claims 1 - 9, wherein the layer thickness of the coating (701) is 2-30 µm, or 2-20 µm, or 5-30 µm, or 5-15 µm.

11. A seat valve according to any one of claims 1 - 10, wherein the silicon oxide, SiOx, has an atomic ratio of O/Si = 1.5-3, or has an atomic ratio of O/Si = 2-2.5.

12. A seat valve according to any one of claims 1 - 11, wherein the coating (701) has a content of carbon of 20-60 atomic%, or 30-40 atomic% or 5-20 atomic%.

13. A seat valve according to any one of claims 1 - 12, wherein the valve housing (2) is made of stainless steel or titanium.
